# EUROPÄISCHE PATENTANMELDUNG

(11) **EP 1 873 887 A2**
(43) Veröffentlichungstag der Anmeldung: **02.01.2008**
(21) Anmeldenummer: 07012117.3
(22) Anmeldetag: 21.06.2007
(51) Int. Cl.: H02K 1/20, H02K 15/02

(54) **Verfahren zum Herstellen einer elektrischen Maschine sowie elektrische Maschine, hergestellt nach diesem Verfahren**

(30) Priorität: 27.06.2006 DE 102006029803
(71) Anmelder: Salwit Agrarenergie GmbH, 92709 Moosbach (DE)
(72) Erfinder: Beer, Alexander, 93059 Regensburg (DE)
(74) Vertreter: Graf, Helmut

(57) **Zusammenfassung**

Verfahren zum Herstellen eines Maschinenelementes (3) einer elektrischen Maschine, mit einer Vielzahl von um eine Maschinenachse verteilten Magnetpolen und mit wenigstens einer Wicklung (5), die mehrere um die Maschinenachse verteilte und jeweils in einer Nut (6) aufgenommene Leiter aufweist, wobei das Maschinenelement (8) eine die Maschinenachse umschießende Spaltfläche bildet, an der es bei montierter Maschine über einen Maschinenspalt an ein weiteres Maschinenelement (8) anschließt und aus Kunststoff gefertigt ist, und wobei zumindest in den Ausnehmungen (6) für die Leiter von einem Kühlmedium durchströmbare Kanalabschnitte (10) gebildet werden.

## Beschreibung

Die Erfindung bezieht sich auf ein Verfahren gemäß Oberbegriff Patentanspruch 1 sowie auf eine elektrische Maschine gemäß Oberbegriff Patentanspruch 10 oder 12.

Zur Erhöhung der Leistung einer elektrischen bzw. elektrodynamischen Maschine ist bereits bekannt, an der dem Rotor zugewandten Innenfläche eines den Rotor umschließenden Stators bzw. an der Innenfläche des Stator-Blechpaketes ein sogenanntes Spaltrohr vorzusehen, d.h. einen kreiszylinderförmigen Wandabschnitt, der die im Blechpaket ausgebildeten und zum Rotor hin offenen Nuten für die Aufnahme der Abschnitte oder Leiter der Statorwicklung zum Maschinenspalt zwischen dem Stator und Rotor abdichtet. Der von den elektrischen Leitern der Wicklung nicht eingenommene Teil jeder Nut kann dann als Kanal eines Kühlkanalsystems verwendet werden, welches von einem geeigneten, elektrisch nicht leitenden Kühlmedium durchströmt wird (DE 10 2004 013 721.8).

Nachteilig hierbei ist, dass das Spaltrohr, d.h. der das Maschinenelement an seiner Spaltfläche im Bereich der Nuten abschließende Wandabschnitt nur unzureichend mit der Innenfläche des den Rotor umgebenden Blechpakets verbunden ist, es hierdurch bereits nach kürzerer Betriebsdauer zu einem Lösen des Spaltrohres von dem Blechpaket und dann zu einer Beschädigung des Spaltrohres durch den umlaufenden Rotor kommt, so dass schließlich auch ein dichtes Kühlkanalsystem nicht mehr gewährleistet ist. Probleme bestehen auch in Bezug auf die Abdichtung des Kühlkanalsystems zu anderen Elementen des Stators bzw. des Statorgehäuses.

Aufgabe der Erfindung ist es, ein Verfahren aufzuzeigen, welches diese Nachteile vermeidet. Zur Lösung dieser Aufgabe ist ein Verfahren entsprechend dem Patentanspruch 1 ausgebildet. Eine elektrische Maschine ist Gegenstand des Patentanspruchs 10 oder 12.

Die erfindungsgemäße elektrische Maschine ist beispielsweise ein Motor, z.B. ein Synchronmotor, Asynchronmotor oder Gleichstrommotor. Bevorzugt ist die erfindungsgemäße Maschine eine solche mit einem die Wicklung aufweisenden Stator und mit einem von dem Stator umschlossenen Rotor oder aber mit einem den Stator umschließenden Rotor.

Bei der erfindungsgemäßen Maschine ist das die Wicklung aufweisende Maschinenelement zumindest an seiner den Maschinenspalt begrenzenden Fläche aus einem elektrisch isolierenden Material, nämlich aus Kunststoff gefertigt, und zwar gemäß einer ersten Ausführungsform der Erfindung unter Verwendung eines rohrartigen Wandabschnitts (Spaltrohres), welcher mit nutenartigen Vorsprüngen in Nuten zur Aufnahme der Leiter der Wicklung hineinreicht und dort formschlüssig gehalten ist, so dass auch die Gefahr eines Lösens dieses Wandabschnittes von dem die Nuten aufweisenden Maschinenelementkörper oder Blechpaket nicht besteht.

Entsprechend einer weiteren generellen Ausführungsform der Erfindung ist der die Wicklung aufweisende und die Magnetpole bildende Maschinenelementkörper aus Kunststoff gefertigt, der einen hohen Anteil an einem elektrisch nicht leitenden, allerdings magnetisch leitenden Füller enthält.

Die elektrische Maschine gemäß der Erfindung erfüllt sämtliche Anforderungen an eine solche Maschine, nämlich hohe mechanische Festigkeit, insbesondere auch Schwingungs- und Stoßfestigkeit, vollständige elektrische Isolation gegenüber der Umgebung, vollständige elektrische Isolation der Befestigung der Maschine, vollständige elektrische Isolation der Antriebswelle, Explosionsschutz bei Betrieb in Umgebung mit Gefahrenstoffen, gesteigerte und wesentlich verbesserte Wärmeabfuhr für höhere Leistungsdichte, Integration der Leistungs- und Steuerelektronik in dem Gehäuse der Maschine.

Die Steuerung der erfindungsgemäßen Maschine erfolgt vorzugsweise durch schnellschaltende IGBT's. Das mit den Magnetpolen der Wicklung zusammenwirkende weitere Maschinenelement, d.h. bevorzugt der Rotor, ist vorzugsweise mit Permanentmagneten bestückt, so dass bei vereinfachtem Aufbau auch die hohe Leistungsdichte erreicht wird.

In Weiterbildung der Erfindung kann das Verfahren u.a. auch so ausgebildet sein, das Füllmaterial durch Erhitzen und/oder Aufschmelzen entfernt wird, und/oder
dass bei Ausbildung des Maschinenelementes mit mehreren, in Richtung zum Maschinenspalt hin offenen Nuten für die Wicklungsabschnitte der Wicklung diese Nuten nach dem Einbringen der Wicklung mit dem Füllmaterial derart versehen werden, dass dieses Material eine den jeweiligen Wicklungsabschnitt im Inneren jeder Nut abdeckende, die jeweilige Nut aber im Bereich ihrer schlitzförmigen Öffnung freilassende Verfüllung bildet, und dass in dem Formgebungs- oder Gießprozess eine das Maschinenelement an seiner dem Maschinenspalt zugewandten Fläche umschließende rohrförmige Wandung aus dem Kunststoff erzeugt wird, und zwar mit in die Nuten hineinreichenden und dort formschlüssig verankerten, vorzugsweise leistenartigen Vorsprüngen,
und/oder
dass jede Nut in dem von dem jeweiligen Abschnitt der Wicklung nicht eingenommenen und an die schlitzförmige Öffnung der Nut anschließenden Abschnitt vollständig mit dem Füllmaterial gefüllt wird, und dass in einem weiteren Verfahrensschritt das Füllmaterial bis auf die den jeweiligen Abschnitt der Wicklung abdeckende, die Nut aber im Bereich ihrer schlitzförmigen Öffnung freilassende Verfüllung wieder entfernt wird,
und/oder
dass die Nuten an ihrer Nutenöffnung eine reduzierte Nutenbreite und im Abstand von der Nutöffnung eine vergrößerte Nutenbreite besitzen,
und/oder
dass die Verfüllung aus dem Füllmaterial derart eingebracht wird, dass die Nutenöffnung mit einem sich an diese Öffnung anschließenden, in der Breite vergrößerten Bereich freiliegt,
und/oder
dasss ein die Nuten für die Abschnitte der Wicklung aufweisender Maschinenelementkörpers in Form eines Blechpaketes verwendet ist,
und/oder
dass die wenigstens eine Wicklung Wicklungsköpfe aufweist, und dass im Bereich wenigstens eines Wicklungskopfes zumindest ein diesen zumindest teilweise umschließender Kühlmediumkanal dadurch gebildet wird, dass der Wicklungskopf zumindest teilweise von dem Füllmaterial umschlossen wird, dass anschließend aus Kunststoff ein den Wicklungskopf umschließender Abschnitt des Maschinenelementes erzeugt und dann das Füllmaterial zum Freilegen des Kühlmittelkanals entfernt wird,
und/oder
dass der den wenigstens einen Wickelkopf umschließende Abschnitt des Maschinenelementes in einem gemeinsamen Verfahrensschritt und vorzugsweise einstückig mit dem das Maschinenelement an seiner Spaltfläche abdeckenden Wandabschnitt erzeugt wird,
und/oder
dass die Abschnitte der wenigstens einen Wicklung jeweils ein einem Spulenträger aus einem magnetisch neutralen Material aufgenommen sind, dass die um die Maschinenachse verteilt an der Spaltfläche vorgesehenen Spulenträger nach dem Einbringen der Wicklungen mit dem Füllmaterial ausgefüllt werden, dass anschließend ein Enbetten der Spulenträger in einem Kunststoff erfolgt, welcher einen elektrisch isolierenden, aber magnetisch leitenden Füllstoff enthält, und zwar derart, dass ein an der Spaltfläche die Vielzahl der Magnetpole bildende Maschinenelementkörper aus Kunststoff erhalten ist,
und/oder
dass beim Formgebungs- oder Gießprozess ein verstärkendes sowie ggs. auch Funktionselemente des Maschinenelementes bildendes Metallgerüst in den Kunststoff eingebettet wird,
und/oder
dass das Formen derart erfolgt, dass das Metallgerüst zumindest weitestgehend von dem Kunststoff umschlossen ist,
und/oder
dass das Formen derart erfolgt, dass die wenigstens eine Wicklung sowie ein evtl. aus einem magnetisch und elektrisch leitenden Material bestehender und die Wicklung aufnehmender Teil des Maschinenelementes, beispielsweise ein Blechpaket, elektrisch von dem Metallgerüst isoliert ist,
und/oder
dass das Maschinenelement ein Stator ist,
und/oder
dass das Maschinenelement ein einen Rotor umschließender Stator ist,
und/oder
dass das Maschinenelement ein von einem Rotor umschlossener Stator ist,
wobei die vorgenannten Merkmale jeweils für sich oder in beliebiger Kombination verwendet sein können.

In Weiterbildung der Erfindung kann die elektrische Maschine auch so ausgebildet sein,
dass das Maschinenelement zumindest an seinem die Magnetpole aufweisenden Bereich aus einem Kunststoff hergestellt ist, welcher einen elektrisch isolierenden, aber magnetisch leitenden Füllstoff enthält,
und/oder
dass zumindest in den Ausnehmungen für die Wicklungsabschnitte oder Leiter von einem Kühlmedium durchströmbare Kanalabschnitte ausgebildet sind,
und/oder
dass die Kanalabschnitte unter Verwendung eines Füllmaterials erzeugt sind, welches vor dem Gießprozess zum Freihalten der Kanalabschnitte ein- und/oder aufgebracht und nach dem Formgebungs- oder Gießprozess entfernt wurde,
und/oder
dass das Füllmaterial durch Erhitzen und/oder Aufschmelzen entfernt wurde,
und/oder
dass das Maschinenelementes mehrere in Richtung zum Maschinenspalt hin offene Nuten für die Wicklungsabschnitte der Wicklung aufweist, und dass eine das Maschinenelement an seiner dem Maschinenspalt zugewandten Fläche umschließende rohrförmige Wandung aus Kunststoff mit in diese Nuten hineinreichenden und dort formschlüssig verankerten, vorzugsweise leistenartigen Vorsprüngen vorgesehen ist,
und/oder
dass die Nuten an ihrer Nutenöffnung eine reduzierte Nutenbreite und im Abstand von der Nutöffnung eine vergrößerte Nutenbreite besitzen,
und/oder
ein die Nuten für die Wicklung aufweisendes Blechpaket verwendet ist,
und/oder
dass die wenigstens eine Wicklung Wicklungsköpfe aufweist, und dass im Bereich wenigstens eines Wicklungskopfes zumindest ein diesen zumindest teilweise umschließender Kühlmediumkanal gebildet ist,
und/oder
dass die Abschnitte der wenigstens einen Wicklung in um die Maschinenachse verteilt an der Spaltfläche vorgesehenen Spulenträgern aus einem magnetisch neutralen Material aufgenommen sind, und dass die Spulenträger in dem Kunststoff eingebettet sind, welcher einen elektrisch isolierenden, aber magnetisch leitenden Füllstoff enthält, und zwar derart, dass ein an der Spaltfläche die Vielzahl der Magnetpole bildende Maschinenelementkörper aus Kunststoff erhalten ist,
und/oder
dass in den Spulenträgern Kühlkanäle gebildet sind,
und/oder
dass in den Kunststoff ein verstärkendes sowie ggs. auch Funktionselemente des Maschinenelementes bildendes Metallgerüst in den Kunststoff eingebettet ist,
und/oder
dass das Metallgerüst zumindest weitestgehend von dem Kunststoff umschlossen ist,
und/oder
dass das Formen derart erfolgt, dass die wenigstens eine Wicklung sowie ein evtl. aus einem magnetisch und elektrisch leitenden Material bestehender und die Wicklung aufnehmender Teil des Maschinenelementes, beispielsweise ein Blechpaket, elektrisch von dem Metallgerüst isoliert ist,
und/oder
dass das Maschinenelement ein Stator ist,
und/oder
dass das Maschinenelement ein einen Rotor umschließender Stator ist,
und/oder
dass das Maschinenelement ein von einem Rotor umschlossener Stator ist,
wobei die vorgenannten Merkmale jeweils für sich oder in beliebiger Kombination vorhanden sein können.

Weiterbildungen, Vorteile und Anwendungsmöglichkeiten der Erfindung ergeben sich auch aus der nachfolgenden Beschreibung von Ausführungsbeispielen und aus den Figuren. Dabei sind alle beschriebenen und/oder bildlich dargestellten Merkmale für sich oder in beliebiger Kombination grundsätzlich Gegenstand der Erfindung, unabhängig von ihrer Zusammenfassung in den Ansprüchen oder deren Rückbeziehung. Auch wird der Inhalt der Ansprüche zu einem Bestandteil der Beschreibung gemacht.

Die Erfindung wird im Folgenden anhand der Figuren an Ausführungsbeispielen näher erläutert. Es zeigen:
- Fig. 1: in vereinfachter Darstellung einen Längsschnitt durch ein Motorgehäuse sowie den Stator eines Elektromotors;
- Fig. 2: in vereinfachter Darstellung einen Querschnitt durch das Gehäuse und den Stator der Figur 1;
- Fig. 3: eine vergrößerte Detailansicht des Bereichs A der Figur 2;
- Fig. 4: im Längsschnitt den Stator des Elektromotors der Figuren 1 - 3 in einem vorbereiteten Zustand für die Herstellung dieses Gehäuses sowie eines Spaltrohres durch Gießen;
- Fig. 5: in vergrößerter Teildarstellung einen Schnitt durch einen Teil der Wicklung sowie des Blechpaketes des Stators der Figur 4;
- Fig. 6: eine Darstellung ähnlich Figur 5, jedoch nach einem weiteren Verfahrensschritt;
- Fig. 7: den mit Hilfe von Zentrierringen an einem Metallgerüst des Motorgehäuses montierten Stator;
- Fig. 8: einen Schnitt ähnlich Figur 2, nach dem Gießen des Motorgehäuses und des Spaltrohres;
- Fig. 9: in vergrößerter Detaildarstellung den Bereich A der Figur 8;
- Fig. 10: einen Schnitt durch den Stator eines Elektromotors gemäß einer weiteren Ausführungsform der Erfindung.

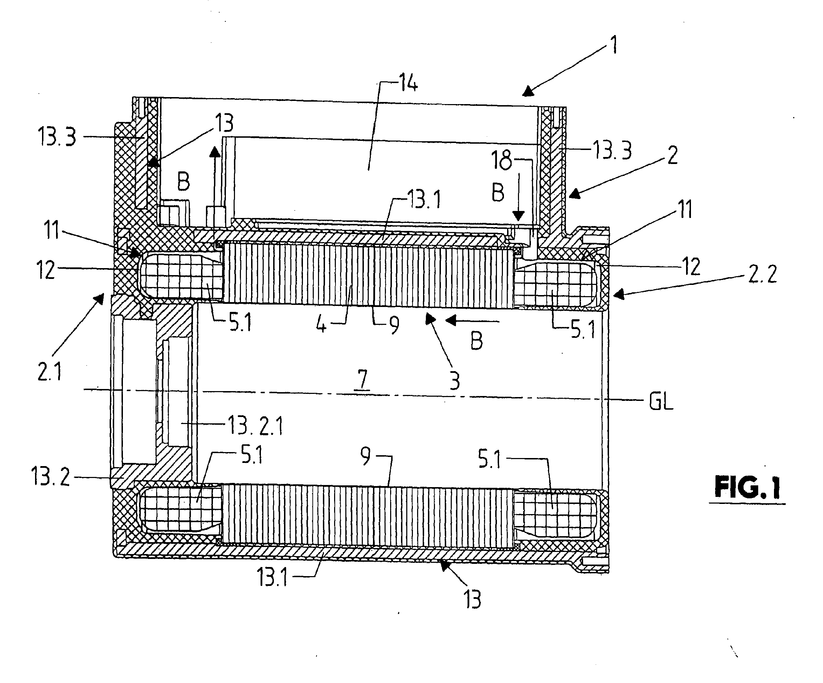

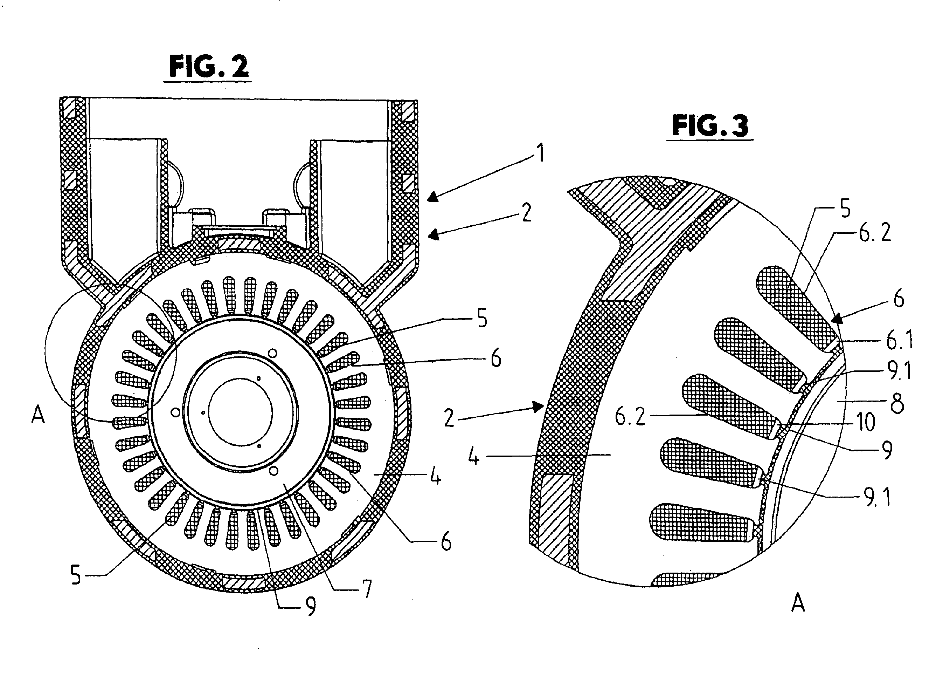

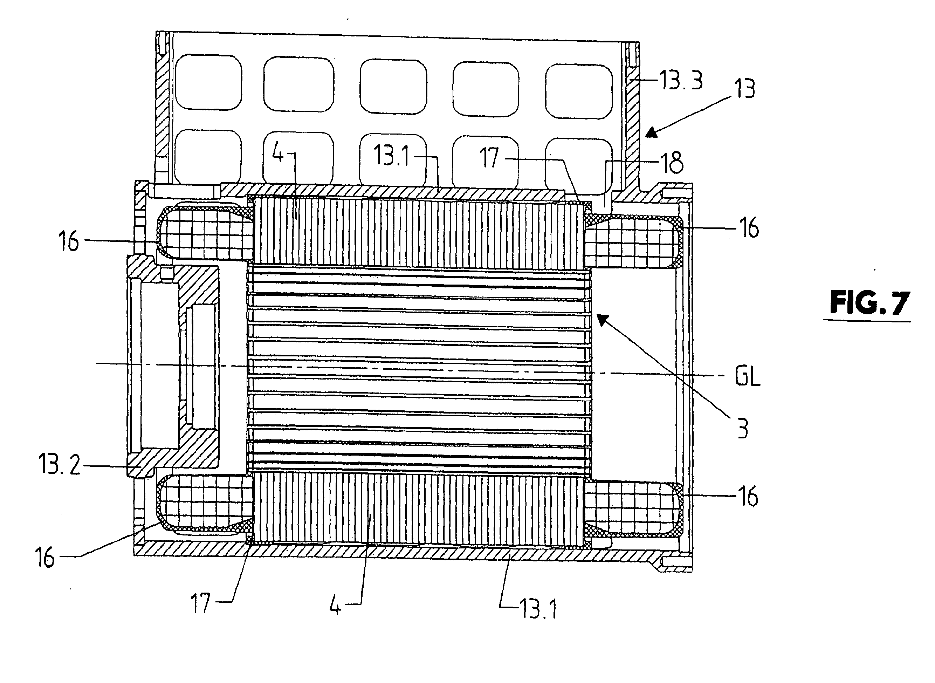

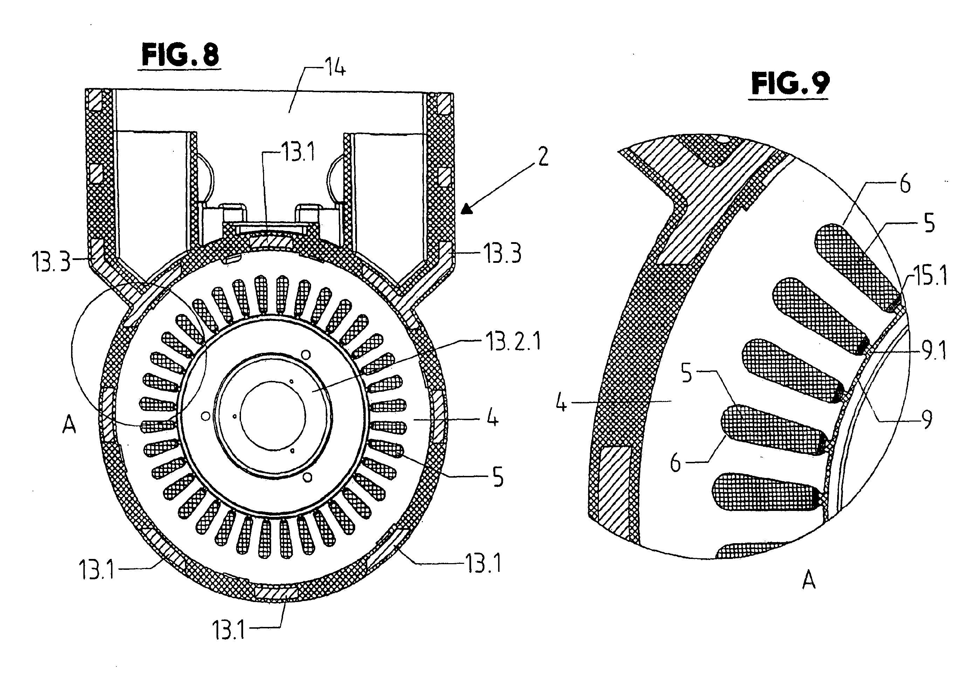

Der in den Figuren 1 - 9 allgemein mit 1 bezeichnete Elektromotor hoher Leistung besteht aus einem äußeren Motorgehäuse 2 sowie aus dem konzentrisch um eine Gehäuselängsachse GL angeordneten Stator 3. Der Stator 3 ist seinerseits im Wesentlichen von einem Blechpaket 4 und einer Wicklung 5 gebildet, deren Leiter oder Wicklungsabschnitte in zur Achse GL hin offenen und sich parallel zu dieser Achse erstreckenden Nuten 6 aufgenommen ist. Die Nuten 6 sind hierbei so ausgebildet, dass sie zu dem von dem Stator 3 umschlossenen und zur Aufnahme des Rotors 8 dienenden Raum 7 jeweils über einen über die gesamte Länge des Blechpackets 4 parallel zur Achse GL erstreckenden Schlitz 6.1 hin offen sind, der eine im Vergleich zum restlichen Bereich 6.2 jeder Nut 6 deutlich reduzierte Breite aufweist. Die Wicklung 5 bildet an beiden Enden des Blechpaketes 4 über diese Enden wegstehende Wickelköpfe 5.1.

Die dem Raum 7 bzw. dem Spalt zwischen Blechpaket 4 und Rotor 8 zugewandte Innenfläche des Blechpaketes 4 ist von einem rohrförmigen Wandabschnitt 9 (Spaltrohr) umschlossen, welcher u.a. auch sämtliche Nuten 6 an ihrem Schlitz 6.1 zum Raum 7 bzw. Rotor 8 hin abdichtet. An den beiden Enden geht der Wandabschnitt 9 jeweils abgedichtet jeweils in ein Ende 2.1 bzw. 2.2 des Motorgehäuses 2 über.

Wie die Figuren 1 - 3 zeigen, ist der kreiszylinderförmige Wandabschnitt 9 so geformt, dass er sich mit über die Außenfläche dieses Wandabschnittes 9 radial wegstehenden leistenartigen Abschnitten 9.1 durch die Schlitze 6.1 in die Nuten 6 hinein erstreckt, und zwar derart, dass die leistenartige Abschnitte 9.1 das Blechpaket 4 im Bereich der Nuten 6 bzw. deren Schlitze 6.1 formschlüssig hintergreifen. Die leistenartigen Vorsprünge 9.1 sind allerdings so ausgebildet, dass in jeder Nut 6 zwischen dem dortigen Vorsprung 9.1 und der Wicklung 5 ein Spalt oder Kanalabschnitt 10 verbleibt, der sich über die gesamte Länge des Blechpaketes 1 parallel zu der Achse GL erstreckt und in einen die Achse GL umschließenden, nach außen hin verschlossenen Ringraum 11 mündet. An beiden Gehäuseenden 2.1 und 2.2 ist jeweils ein solcher Ringraum 11 ausgebildet ist und in dem die dortigen Wickelköpfe 5.1 aufgenommen sind. Die Ringräume 11 sind etwas größer ausgeführt als die Wickelköpfe 5.1, so dass in jedem Ringraum 11 um die Wickelköpfe 5.1 herum ein Spalt oder Kanalabschnitt 12 gebildet ist, der dann mit sämtlichen Kanalabschnitten 10 in Verbindung steht. Durch diese Ausbildung ist es möglich, den Stator 3 bzw. dessen Wicklung 5 einschließlich der Wickelköpfe 5.1 während des Betriebes des Elektromotors 1 mit einem geeigneten, elektrisch nicht leitenden Kühlmedium, vorzugsweise mit einem flüssigen Kühlmedium (z.B. Transformatoröl oder Kälteschalteröl) wirksam zu kühlen, welches hierfür die von den Kanalabschnitten 10 und 12 gebildete Kühlkanalstruktur durchströmt, und zwar entsprechend den Pfeilen B der Figur 1 beispielsweise von dem im Gehäuseende 2.2 ausgebildeten Ringraum 11 oder Kanalabschnitt 12 über die Kanalabschnitte 10 an den im Gehäuseende 2.2 ausgebildeten Ringraum 11 oder Kanalabschnitt 12. Hierbei werden die Wickelköpfe 5.1 und die Abschnitte der Wicklung 5 in den Nuten 6 innig von dem Kühlmedium umströmt, wobei das Kühlmedium auch die Zwischenräume zwischen den Leitern in den Nuten 6 durchströmt.

Die von den Kanalabschnitten 10 und 12 gebildete Kühlkanalstruktur ist Bestandteil eines Kühlmittelkreislaufs, der außerhalb des Motors u.a. ein Reservoire sowie eine Umwälzpumpe für das flüssige Kühlmedium sowie einen externen Wärmetauscher aufweist. Durch den Wandabschnitt 9 ist die von den Kanalabschnitten 10 und 12 gebildete Kühlkanalstruktur u.a. dicht zu dem den Rotor 8 aufnehmenden Raum 7 verschlossen. Durch die Verankerung des Wandabschnittes 9 mit einer Vielzahl von in jeweils eine Nut 6 eingreifenden leistenartigen Vorsprüngen 9.1 ist der Wandabschnitt 9 (Spaltrohr) zuverlässig an der Innenfläche des Blechpaketes 4 verankert. Hierdurch ist trotz einer für den angestrebten hohen Wirkungsgrad des Rotors 1 zumindest zweckmäßigen geringen Spaltbreite zwischen dem Rotor 8 und dem Blechpaket 4 und einer sich hieraus ergebenden geringen Wanddicke des Wandabschnittes 9 ein Ausweichen des Wandabschnittes 9 durch den Druck des Kühlmediums radial nach innen wirksam verhindert.

Das Motorgehäuse 2 besteht bei der dargestellten Ausführungsform im Wesentlichen aus Kunststoff und ist beispielsweise einstückig mit dem Wandabschnitt 9 in der nachstehend noch näher beschriebenen Weise gefertigt. Zur Erzielung der erforderlichen Festigkeit enthält das Gehäuse 2 ein Metallgerüst 13, welches filigran bzw. mehrfach unterbrochen ausgeführt ist, und zwar u.a. mit einem den Stator 3 umschließenden zylinderartigen Abschnitt 13.1, mit einem das Gehäuseende 2.1 verstärkenden Abschnitt 13.3, welcher zugleich auch als Lageröffnung zur Aufnahme eines Lagers für die Welle des Rotors 8 ausgeführt ist, sowie mit einem oberen Abschnitt 13.3, der einen mit einem nicht dargestellten Deckel verschließbaren Gehäuseabschnitt 2.3 verstärkt. Dieser bildet einem Innenraum 14 zur Aufnahme der zum Betrieb des Motors 1 benötigten elektrischen Bauelemente, Schaltkreise usw.

An dem das Gehäuseende 2.2 bildenden Teil ist das Metallgerüst 13 zum Anschrauben eines nicht dargestellten Deckels ausgebildet, in welchem dann der Rotor 8 bzw. dessen Welle ebenfalls gelagert sind. Nach außen hin ist das Metallgerüst 13 durch das Kunststoffmaterial des Gehäuses 2 weitestgehend umschlossen.

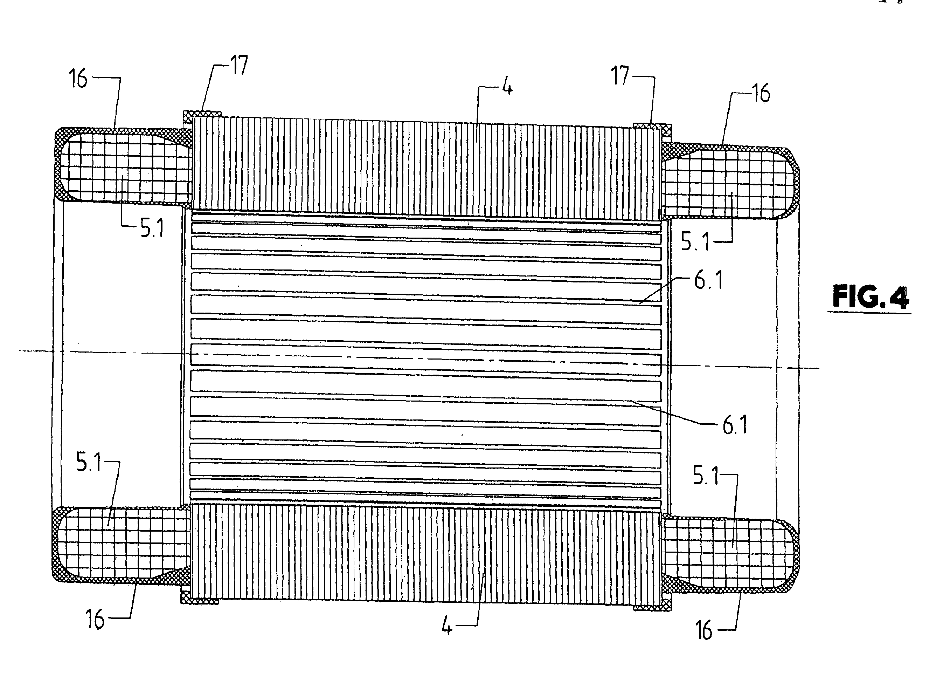

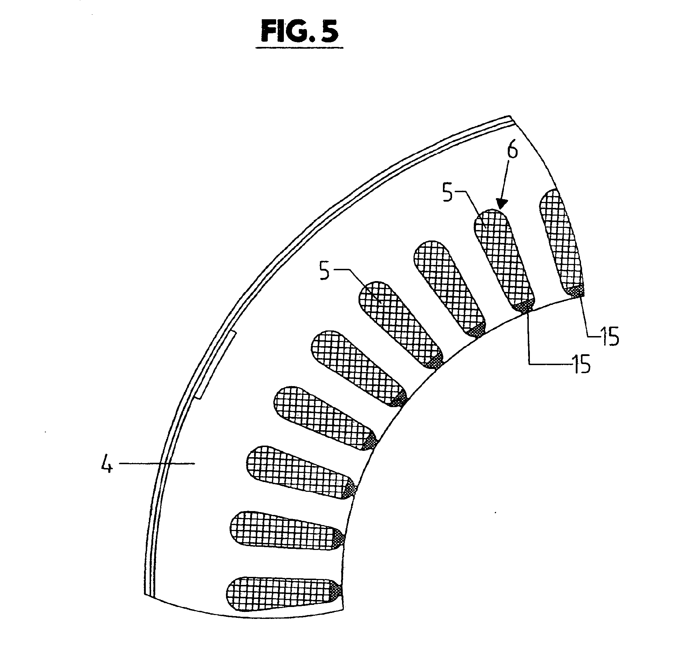

Die Figuren 4 - 9 verdeutlichen die Herstellung des Elektromotors 1. Zunächst wird entsprechend den Figuren 4 und 5 der Stator 3 mit der Wicklung 5 und den Wickelköpfen 5.1 gefertigt. Hierbei wird unter Verwendung einer entsprechenden Form der von den Leitern der Wicklung 5 nicht eingenommene Raum der Nuten 6, d.h. der jeweilige spätere Kanalabschnitt 12, sowie der von den Wickelköpfen 5.1 nicht eingenommene Teil des jeweiligen Ringraumes 11, d.h. der jeweilige spätere Kanalabschnitt 12, mit einer durch Erhitzen entfernbaren Füllmasse, d.h. beispielsweise mit Wachs vergossen, wie dies in den Figuren 4 und 5 bei 15 (für die Nuten 6) und bei 16 (für die Wickelköpfe 5.1) angedeutet ist.

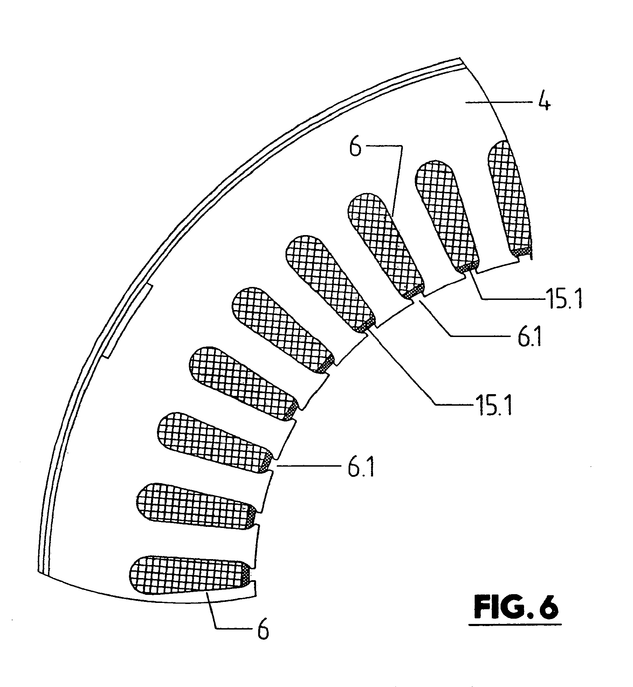

Die Wachsverfüllung 15 in jeder Nut 6 wird dann in einem nächsten Verfahrensschritt wieder teilweise entfernt, so dass die Schlitze 6.1 mit ihrer durch die anschließenden Verbreiterung jeder Nut 6 gebildeten Hinterschneidung freiliegen, wie dies in der Figur 6 dargestellt ist. In jeder Nut 6 verbleibt somit eine Wachsfüllung 15.1, die dem in diese Nut zu formenden Kanalabschnitt 10 entspricht und diesen freihält sowie den von den Leitern der Wicklung 5 eingenommenen Raum jeder Nut nach Außen dicht verschließt.

Das teilweise Entfernen der Wachsverfüllung 15 erfolgt beispielsweise mechanisch mit einem geeigneten Werkzeug, z.B. mit einem Vielfach-Werkzeug, mit dem gleichzeitig sämtliche Nuten 6 oder aber eine größere Anzahl mehrerer Nuten zum teilweisen Entfernen der Wachsverfüllung 15 und zur Erzeugung des verbleibenden Wachsverfüllung 15.1 bearbeitet werden. Der so mit den Wachsverfüllungen 15.1 und 16 versehene Stator 3 wird dann mit den aus Kunststoff gefertigten Zentrierringen 17 in das Metallgerüst eingesetzt, so dass nach dem Einsetzen der Stator 3 zentriert, d.h. mit seiner Längsachse achsgleich mit der Achse GL bzw. mit der Achse der im Metallgerüst 13 vorbereiteten Lagerbohrung 13.2.1 angeordnet ist. Anschließend wird das Metallgerüst 13 mit dem Stator 3 in eine mehrteilige Gießform eingesetzt, in der unter Ummanteln des Metallgerüstet 13 mit Kunststoff oder Kunstharz das Gehäuse 2 sowie gleichzeitig auch der Wandabschnitt 9 erzeugt werden. Durch das teilweise Entfernen der Wachsverfüllung 15 in den Nuten 6 können sich beim Gießen des Gehäuses 2 zusammen dir dem Wandabschnitt 9 auch die diesen an der Innenfläche des Blechpaketes 4 formschlüssig verankernden nutenartigen Vorsprünge 9.1 ausbilden.

Es versteht sich, dass die verwendete Gießform u.a. einen Kern aufweist, der beim Gießen des Gehäuses 2 den Innenraum 7 sowie auch die im Metallgerüst 13 bereits vorbereitete Lagerbohrung 13.2.1 freihält. Durch die Zentrierringe 17 ist das Blechpaket 4 auf der sich zwischen diesen Zentrierringen erstreckenden Länge von der Innenfläche des Abschnittes 13.1 beabstandet, so dass auch dieser Ringraum beim Gießen des Gehäuses 2 von dem verwendeten Kunststoff ausgefüllt wird und dadurch der Stator 3 mechanisch fest, aber elektrisch vollständig isoliert mit dem Metallgerüst 13 verbunden ist.

Als Kunststoff wird vorzugsweise ein Kunstharz, beispielsweise ein ZweikomponentenKunstharz verwendet, welches beispielsweise bei einer Temperatur deutlich unter der Schmelztemperatur des für die Wachsverfüllungen verwendeten Materials aushärtet.

Nach dem Aushärten des das Gehäuse 2 und den Wandabschnitt 9 (Spaltrohr) bildenden Kunststoffs, wird das Gehäuse 2 mit dem Stator 3 in geeigneter Weise, beispielsweise in einem Ofen auf eine Temperatur erhitzt, die deutlich über den Schmelzpunkt des für die Wachsverfüllungen 15.1 und 16 verwendeten Wachses liegt. Bei dieser Temperatur wird das verflüssigte Wachs entfernt, und zwar über ebenfalls aus dem Wachs geformte Einlässe 18 an den die Wickelköpfe 5.1 aufnehmenden Räumen 11. Gleichzeitig wird durch das Erhitzen ein weiteres Aushärten des Kunststoffs erreicht, so dass dieser bzw. das Gehäuse 2 auch bei höheren Betriebstemperaturen des Motors 1 stabil sind.

Nach dem Entfernen der Wachsverfüllungen 15.1 und 16 ist am Stator 3 die von dem vorzugsweise flüssigen Kühlmedium durchströmbare Kühlkanalstruktur fertiggestellt. In weiteren Montageschritten erfolgt dann die Montage des vorzugsweise mit Permanentmagneten bestückten Rotors 8, de zugehörigen Lager und des das Gehäuse 2 an der Gehäuseseite 2.2 abschließenden Deckels.

Der Stator 3, nämlich das Blechpaket 4 sowie die Wicklung 5 einschließlich der Wickelköpfe 5.1 sind elektrisch von elektrisch leitenden Teilen des Gehäuses 2, nämlich vom Metallgerüst 13 und den von diesen Gerüst gebildeten Lagern oder Lageröffnungen sowie durch den Wandabschnitt 9 (Spaltrohr) auch elektrisch gegenüber dem Rotor 8 getrennt;

Die von dem Kühlmedium durchströmten Kühlkanäle sind so ausgeführt, dass im Bereich des jeweiligen Kanalabschnitts 12 das Kühlmedium auch die Wickelköpfe 5.1 vollständig umströmt und auch die hier anfallende Wärmeenergie von dem Kühlmedium aufgenommen werden kann.

Wie in der Figur 1 angedeutet, steht der Innenraum 17 des oberen Gehäuseabschnitts 2.3 über die Öffnung 18 mit der von den Kanalabschitten 10 und 12 gebildeten Kühlkanalstruktur in Verbindung, d.h. auch die in dem Innenraum 17 untergebrachte Leistungselektronik wird von dem Kühlmedium umströmt.

Die beschriebene Ausbildung hat weitere Vorteile, nämlich u.a.:
Die Nuten 6 sind als Kühlkanäle ausgebildet, so dass eine direkte Wärmeabfuhr über das Kühlmedium im Wicklungsraum des Stators 3 erfolgt;
der Wandabschnitt 9 (Spaltrohr) ist durch die die Hinterschneidungen an den Schlitzen 6.1 formschlüssig hintergreifenden Abschnitte 9.1 zuverlässig an der Innenfläche des Blechpakets 4 gehalten;
auch bei einem höheren Druck des die Kühlkanäle des Stators 3 durchströmenden Kühlmediums besteht die Gefahr eines Ablösens des Wandabschnittes 9 vom Blechpaket nicht.
Anordnung der Leistungselektronik im Kühlmittelkreislauf zur direkten Wärmeabführung der Verlustwärme der Leistungselektronik;
Elektrische Isolierung des gesamten Stators 3 einschließlich Blechpaket 4 und Wicklung 5 gegenüber dem Metallgerüst 13 und den an diesem Gerüst befestigten oder ausgebildeten Elementen aus metallischem Werkstoff;
Gehäuse 2 aus Kunststoff;
Eingebettetes Metallgerüst 13 für hohe Festigkeit und Steifigkeit des Motors.

Weitere Vorteile sind u.a. auch die vereinfachte Herstellung des Gehäuses 2 einschließlich des Wandabschnittes 9 sowie der verschiedenen Kanäle der Kühlkanalstruktur innerhalb des Stator 3 durch ein vereinfachtes Kunststoffgießverfahren mit anschließendem Ausschmelzen der Wachsverfüllungen 15.1 und 16. Durch die in die Nuten 6 eingreifenden leistenartige Vorsprünge 9.1 wird eine äußerst feste Verbindung des Wandabschnittes 9 mit der Innenfläche des Blechpaketes 4 durch Formschluss erreicht, so dass der Wandabschnitt 9 bei dünnwandiger Ausbildung insbesondere auch für hohe Belastungen zuverlässig an der Innenfläche des Blechpaketes 4 verankert ist, speziell auch bei hohen dynamischen Beanspruchungen des Motors 1 z.B. im Fahrzeugeinsatz sowie bei hohen Drücken des flüssigen Kühlmediums.

Durch die Herstellung des Gehäuses 2 im Kunststoffgießverfahren kann dieses in der in der Figur 1 dargestellten Form einstückig gefertigt werden, so dass u.a. aufwendige Abdichtungen und Fügeverfahren entfallen. Weiterhin kann wegen der hohen Fertigungsgenauigkeit des Gießverfahrens auf eine Nachbearbeitung verzichtet werden. Mit dem metallischen Drahtgerüst 13 werden eine hohe mechanische Festigkeit sowie eine hohe Formbeständigkeit erreicht. Sämtliche spannungsführende, insbesondere auch höhere elektrische Spannungen führende Bauteile der Leistungselektronik sind in dem Gehäuse 2 bzw. in dem dortigen, durch einen Deckel verschließbaren Gehäuseteil 2.3 aufgenommen, so dass sich kurze elektrische Verbindungen zwischen diesen Bauteilen und der Wicklung 5 ergeben. Weiterhin werden alle Bauteile von dem Kühlmedium umströmt und daher gekühlt. Da insbesondere auch die Innenflächen des Innenraumes 14 von dem Kunststoff gebildet sind, ist die gesamte, in diesem Innenraum aufgenommene Leistungselektronik einschließlich der kapazitiven und induktiven Komponenten elektrisch isoliert im Gehäuse 2 untergebracht. Durch entsprechende Formgebung der Wachsverfüllungen kann eine optimale Kontur für die von dem Kühlmedium durchströmten Bereiche der Kühlkanalstruktur erreicht werden, und zwar für eine wirksame Wärmeübertragung von der Wicklung 5 an das Kühlmedium. Die von dem Kühlmedium durchströmten Kanäle sind in ihrer Form und/oder Lage weitestgehend beliebig ausführbar.

Vorstehend wurde davon ausgegangen, dass die Wachsverfüllungen 15 auf mechanischem Weg zur Erzielung der reduzierten Wachsverfüllungen 15.1 bearbeitet werden. Auch andere Methoden sind denkbar, beispielsweise in der Form, dass anstelle der Wachsverfüllungen 15 bereits die Wachsverfüllungen 15.1 erzeugt werden, und zwar unter Verwendung eines mehrteiligen Formwerkzeugs, welches wenigstens ein, zum Entformen axial verschiebbares Werkzeugteil aufweist.

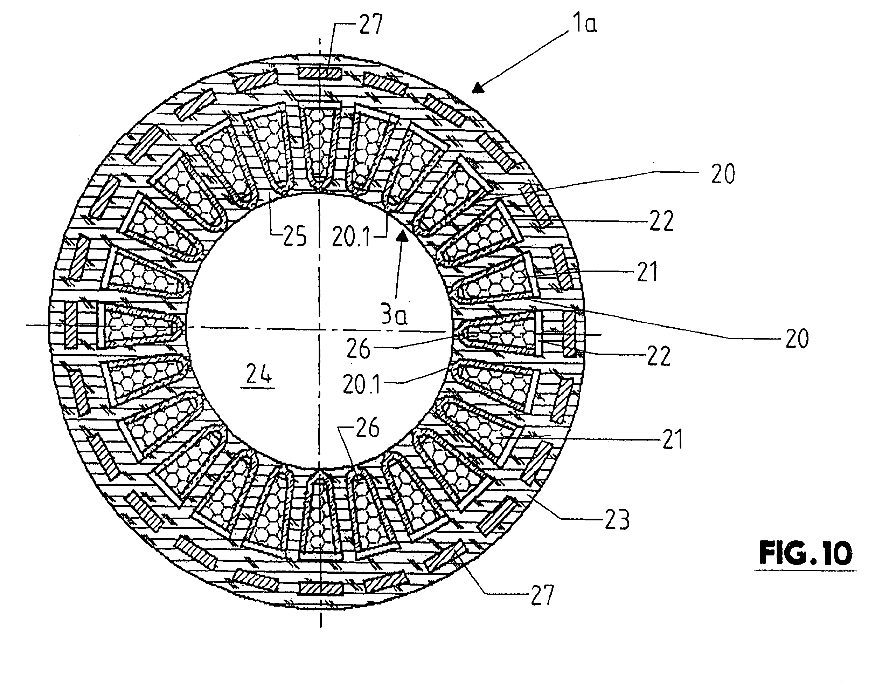

Die Figur 10 zeigt als weitere mögliche Ausführungsform der Erfindung einen Schnitt durch den Stator 3a eines Motors 1a. Der Stator 3a weist bei dieser Ausführungsform zur Bildung der Pole kein Blechpaket aus einem ferromagnetischen Material auf, sondern ist aus einem Kunststoff gefertigt, der einen elektrisch isolierenden, aber magnetisch leitenden Füller, beispielsweise in Form eines Oxids eines ferromagnetischen Materials enthält.

Im Einzelnen besteht der Stator 3a aus einer Vielzahl von Spulenträgern 20, die aus einem elektrisch und magnetisch nicht leitenden Material, beispielsweise aus Kunststoff, gefertigt und in gleichmäßigen Winkelabständen sowie mit gleichem radialen Abstand um die senkrecht zur Zeichenebene der Figur 1 orientierte Längsachse des Stators 3a angeordnet sind. Jeder Spulenträger 20 ist im Querschnitt im Wesentlichen V-förmig ausgebildet, und zwar mit einer stegartigen Verlängerung 20.1 an der abgerundeten, geschlossenen und der Achse des Stators 3a zugewandten Seite. Die Symmetrieebene, zu der jeder Spulenträger 20 einschließlich seiner stegartigen Verlängerung 20.1 spiegelsymmetrisch ausgebildet ist, ist radial zur Statorachse orientiert. In den Spulenträgern 20 sind die Abschnitte oder Leiter Wicklung 21 aufgenommen. Die radial außen liegende offene Seite jedes Spulenträgers 20 ist durch einen leistenartigen Deckel 22 verschlossen, der sich ebenso wie die Spulenträger 20 über die gesamte Länge des Stators 3a erstreckt. Bevorzugt sind die Spulenträger 20 z.B. durch nicht dargestellte Stege zu einer ringförmigen Spulenträgeranordnung miteinander verbunden.

Bei der Herstellung des Stators 3a werden zunächst die Leiter der Wicklung 21 in die kreisringförmig um die Achse des Stators 3a angeordneten Spulenträger 20 eingebracht, und zwar radial von außen, so dass in besonders einfacher Weise die gesamte Wicklung 21 in einem Außenwickelverfahren hergestellt werden kann. Insbesondere ist es hierdurch auch möglich, die komplette Wicklung 21 automatisch bzw. maschinell zu erstellen. Im Anschluss daran werden die Abschnitte der Wicklung 21 in jedem Spulenträger 20 mit Wach vergossen, so dass dieses die sich beim Einbringen der Leiter ergebenden Hohlräume ausfüllt, insbesondere auch an dem radial innen liegenden, geschlossenen Bereich jedes Spulenträgers 20. Die Spulenträger 20 werden dann durch den zugehörigen streifenförmigen Deckel 22 dicht verschlossen. Im Anschluss daran erfolgt in einer entsprechenden Form das Formen des Statorkörpers 23 aus dem Kunststoff mit dem elektrisch isolierenden, magnetisch aber leitenden Füller in der Form, dass die einzelnen Spulenträger 20 in dem Statorkörper 23 eingebettet sind und mit den freien Enden ihrer Stege 20.1 bis an die die Öffnung 24 für den nicht dargestellten Rotor umschließende Innenfläche des Stators 3a reichen und hierdurch den Magnetspalt zwischen jeweils zwei benachbarten Polen formen. Zur mechanischen Verstärkung des Stators 3a ist in diesem bezogen auf die Spulenträger 20 radial nach außen versetzt ein Metallgerüst 25 eingebettet.

Um das Formen des Statorkörpers 23 unter Freihaltung des Raumes 24 für den Rotor zu vereinfachen, kann es zweckmäßig sein, die die einzelnen Spulenträger 20 aufweisende Spulenträgeranordnung so zu formen, dass die von den V-förmigen Abschnitten der Spulenträger 20 wegstehenden Stege 20.1 jeweils in einen gemeinsamen den Raum 24 umschließenden kreiszylinderförmigen Wandabschnitt 25 übergehen, der ebenfalls aus Kunststoff gefertigt ist, und zwar vorzugsweise einstückig mit den Spulenträgern 20, und von dessen Umfangsfläche die Spulenträger 20 radial wegstehen.

Nach dem Formen des Statorkörpers 23 wird wiederum durch Erhitzen das Wachs entfernt, so dass sich in jedem Spulenträger 20 zwischen den dortigen Leitern der Wicklung 21 sowie auch am radial innen liegenden geschlossenen Bereich der Kanäle 26 bilden, die im Betrieb des Motors 1a zum Kühlen der Wicklung 21 und damit des Stators 3a von einem vorzugsweise flüssigen, elektrisch isolierenden Kühlmedium, z.B. von einem Transformatoröl durchströmt werden.

Während der Elektromotor 1 insbesondere für hohe Leistungen geeignet und bestimmt ist, stellt der Elektromotor 1a eine besonders preiswerte Lösung für einen Motor mit niedriger Leistung dar.

Die Erfindung wurde voranstehend an Ausführungsbeispielen beschrieben. Es versteht sich, dass Änderungen sowie Abwandlungen möglich sind, ohne dass dadurch der der Erfindung zugrunde liegende Erfindungsgedanke verlassen wird.

So ist es beispielsweise möglich, die Deckel 22 ebenfalls aus Wachs herzustellen, so dass nach dem Ausschmelzen des Wachses der zuvor von dem jeweiligen Deckel 22 eingenommene Raum ebenfalls einen Kanal bildet, der von dem Kühlmedium durchströmt wird.

### Bezugszeichenliste

- 1, 1a: Elektromotor
- 2: Rotor- oder Statorgehäuse
- 2.1, 2.2: Gehäuseseite
- 2.3: Gehäuseabschnitt
- 3, 3a: Stator
- 4: Blechpaket
- 5: Wicklung
- 5.1: Wickelkopf
- 6: Wickelnut
- 6.1: Schlitz
- 6.2: innenliegender Nutenbereich
- 7: Rotorraum
- 8: Rotor
- 9: Wandabschnitt bzw. Spaltrohr
- 9.1: stegartiger Abschnitt
- 10: spaltförmiger Abschnitt des Strömungskanals
- 11: Raum
- 12: spaltförmiger Abschnitt des Strömungskanals
- 13: Metallgerüst
- 13.1, 13.2, 13.3: Abschnitt des Metallgerüstes
- 13, 13.2.1: Lageröffnung
- 14: Innenraum des Gehäuseabschnittes 2.3
- 15, 16: Wachverfüllung
- 15.1: reduzierter Wachverguss
- 17: Zentrierring aus Kunststoff
- 18: Öffnung
- 20: Spulenträger
- 20.1: stegartige Verlängerung des Spulenträgers 20
- 21: Wicklung
- 22: Deckel
- 23: Statorkörper
- 24: Innenraum für Rotor
- 25: hohlzylinderförmiger Wandabschnitt
- 26: Metallgerüst

- A: Einzelheit
- B: Strömungsrichtung des flüssigen Kühlmediums durch die Kühlkanalstruktur des Stators 3
- GL: Gehäuseachse

## Patentansprüche

1. Verfahren zum Herstellen eines Maschinenelementes (3, 3a) einer elektrischen Maschine (1, 1a), mit einer Vielzahl von um eine Maschinenachse (GL) verteilten Magnetpolen und mit wenigstens einer Wicklung (5, 21), die mehrere um die Maschinenachse (GL) verteilte und jeweils in einem Hohlraum oder in einer Nut (6, 20) aufgenommene Wicklungsabschnitte oder Leiter aufweist,
wobei das Maschinenelement (3, 3a) eine die Maschinenachse (GL) umschießende Spaltfläche bildet, an der es bei montierter Maschine (1, 1a) über einen Maschinenspalt an ein weiteres Maschinenelement (8) anschließt und aus Kunststoff gefertigt ist, und wobei zumindest in den Ausnehmungen (6, 20) für die Wicklungsabschnitte oder Leiter von einem Kühlmedium durchströmbare Kanalabschnitte (10, 26) gebildet sind,
**dadurch gekennzeichnet,**
**dass** das Maschinenelement zumindest an seiner Spaltfläche in einem Formgebungs- oder Gießprozess aus Kunststoff hergestellt wird, und
**dass** die Kanalabschnitte (10, 26) unter Verwendung eines Füllmaterials erzeugt werden, welches vor dem Formgebungs- oder Gießprozess zum Freihalten der Kanalabschnitte (10, 26) ein- und/oder aufgebracht und nach dem Formgebungs- oder Gießprozess entfernt wird.

2. Verfahren nach Anspruch 1, **dadurch gekennzeichnet, dass** das Füllmaterial durch Erhitzen und/oder Aufschmelzen entfernt wird.

3. Verfahren nach Anspruch 1 oder 2, **dadurch gekennzeichnet, dass** bei Ausbildung des Maschinenelementes (3) mit mehreren, in Richtung zum Maschinenspalt hin offenen Nuten (6) für die Wicklungsabschnitte der Wicklung (5) diese Nuten (6) nach dem Einbringen der Wicklung mit dem Füllmaterial derart versehen werden, dass dieses Material eine den jeweiligen Wicklungsabschnitt im Inneren jeder Nut (6) abdeckende, die jeweilige Nut (6) aber im Bereich ihrer schlitzförmigen Öffnung (6.1) freilassende Verfüllung (15.1) bildet, und dass in dem Formgebungs- oder Gießprozess eine das Maschinenelement an seiner dem Maschinenspalt zugewandten Fläche umschließende rohrförmige Wandung (9) aus dem Kunststoff erzeugt wird, und zwar mit in die Nuten (6) hineinreichenden und dort formschlüssig verankerten, vorzugsweise leistenartigen Vorsprüngen (9.1),
wobei beispielsweise jede Nut (6) in dem von dem jeweiligen Abschnitt der Wicklung (5) nicht eingenommenen und an die schlitzförmige Öffnung (6.1) der Nut (6) anschließenden Abschnitt vollständig mit dem Füllmaterial gefüllt wird und in einem weiteren Verfahrensschritt das Füllmaterial bis auf die den jeweiligen Abschnitt der Wicklung (5) abdeckende, die Nut (6) aber im Bereich ihrer schlitzförmigen Öffnung (6.1) freilassende Verfüllung (15.1) wieder entfernt wird.

4. Verfahren nach einem der vorhergehenden Ansprüche, **dadurch gekennzeichnet, dass** die Nuten (6) an ihrer Nutenöffnung (6.1) eine reduzierte Nutenbreite und im Abstand von der Nutöffnung (6.1) eine vergrößerte Nutenbreite besitzen,
wobei beispielsweise die Verfüllung (15.1) aus dem Füllmaterial derart eingebracht wird, dass die Nutenöffnung (6.1) mit einem sich an diese Öffnung anschließenden, in der Breite vergrößerten Bereich freiliegt.

5. Verfahren nach einem der vorhergehenden Ansprüche, **gekennzeichnet, durch** die Verwendung eines die Nuten für die Abschnitte der Wicklung (5) aufweisenden Maschinenelementkörpers in Form eines Blechpaketes (4).

6. Verfahren nach einem der vorhergehenden Ansprüche, **dadurch gekennzeichnet, dass** die wenigstens eine Wicklung (5) Wicklungsköpfe (5.1) aufweist, und dass im Bereich wenigstens eines Wicklungskopfes (5.1) zumindest ein diesen zumindest teilweise umschließender Kühlmediumkanal (12) **dadurch** gebildet wird, dass der Wicklungskopf (5.1) zumindest teilweise von dem Füllmaterial umschlossen wird, dass anschließend aus Kunststoff ein den Wicklungskopf (5.1) umschließender Abschnitt (2.1, 2.2) des Maschinenelementes (3) erzeugt und dann das Füllmaterial zum Freilegen des Kühlmittelkanals (12) entfernt wird,
wobei beispielsweise der den wenigstens einen Wickelkopf (5.1) umschließende Abschnitt des Maschinenelementes in einem gemeinsamen Verfahrensschritt und vorzugsweise einstückig mit dem das Maschinenelement (3) an seiner Spaltfläche abdeckenden Wandabschnitt (9) erzeugt wird.

7. Verfahren nach einem der vorhergehenden Ansprüche, **dadurch gekennzeichnet, dass** die Abschnitte der wenigstens einen Wicklung (21) jeweils ein einem Spulenträger (20) aus einem magnetisch neutralen Material aufgenommen sind, dass die um die Maschinenachse verteilt an der Spaltfläche vorgesehenen Spulenträger (20) nach dem Einbringen der Wicklungen (21) mit dem Füllmaterial ausgefüllt werden, dass anschließend ein Einbetten der Spulenträger (20) in einem Kunststoff erfolgt, welcher einen elektrisch isolierenden, aber magnetisch leitenden Füllstoff enthält, und zwar derart, dass ein an der Spaltfläche die Vielzahl der Magnetpole bildende Maschinenelementkörper aus Kunststoff erhalten ist.

8. Verfahren nach einem der vorhergehenden Ansprüche, **dadurch gekennzeichnet, dass** beim Formgebungs- oder Gießprozess ein verstärkendes sowie ggs. auch Funktionselemente des Maschinenelementes bildendes Metallgerüst (13, 26) in den Kunststoff eingebettet wird,
wobei das Formen beispielsweise derart erfolgt, dass das Metallgerüst (13, 26) zumindest weitestgehend von dem Kunststoff umschlossen ist, und/oder
wobei das Formen beispielsweise derart erfolgt, dass das Formen derart erfolgt, dass die wenigstens eine Wicklung sowie ein evtl. aus einem magnetisch und elektrisch leitenden Material bestehender und die Wicklung aufnehmender Teil des Maschinenelementes, beispielsweise ein Blechpaket (4), elektrisch von dem Metallgerüst (13, 26) isoliert ist.

9. Verfahren nach einem der vorhergehenden Ansprüche, **dadurch gekennzeichnet, dass** das Maschinenelement ein Stator (3, 3a), beispielsweise ein einen Rotor (8) umschließender Stator (3, 3a) oder ein von einem Rotor (8) umschlossener Stator ist.

10. Elektrische Maschine mit einem Maschinenelement mit einer Vielzahl von um eine Maschinenachse (GL) verteilten Magnetpolen und mit wenigstens einer Wicklung (5, 21), die mehrere um die Maschinenachse (GL) verteilte und jeweils in einem Hohlraum oder in einer Nut (6, 20) aufgenommene Wicklungsabschnitte oder Leiter aufweist, wobei das Maschinenelement (3, 3a) eine die Maschinenachse (GL) umschießende Spaltfläche bildet, an der es über einen Maschinenspalt an ein weiteres Maschinenelement (8) anschließt und aus Kunststoff gefertigt ist, und wobei zumindest in den Ausnehmungen (6, 20) für die Wicklungsabschnitte oder Leiter von einem Kühlmedium durchströmbare Kanalabschnitte (10, 26) ausgebildet sind,
**dadurch gekennzeichnet,**
**dass** das Maschinenelement zumindest an seiner Spaltfläche in einem Formgebungs- oder Gießprozess aus Kunststoff hergestellt ist, und
**dass** die Kanalabschnitte (10, 26) unter Verwendung eines Füllmaterials erzeugt sind, welches vor dem Gießprozess zum Freihalten der Kanalabschnitte (10, 26) ein- und/oder aufgebracht und nach dem Formgebungs- oder Gießprozess entfernt wurde, und zwar beispielsweise durch Erhitzen und/oder Aufschmelzen.

11. Elektrische Maschine nach Anspruch 10, **dadurch gekennzeichnet, dass** das Maschinenelement zumindest an seinem die Magnetpole aufweisenden Bereich aus einem Kunststoff hergestellt ist, welcher einen elektrisch isolierenden, aber magnetisch leitenden Füllstoff enthält.

12. Elektrische Maschine mit einem Maschinenelement mit einer Vielzahl von um eine Maschinenachse (GL) verteilten Magnetpolen und mit wenigstens einer Wicklung (5, 21), die mehrere um die Maschinenachse (GL) verteilte und jeweils in einem Hohlraum oder in einer Nut (6, 20) aufgenommene Wicklungsabschnitte oder Leiter aufweist, wobei das Maschinenelement (3, 3a) eine die Maschinenachse (GL) umschießende Spaltfläche bildet,
**dadurch gekennzeichnet,**
**dass** das Maschinenelement zumindest an seinem die Magnetpole aufweisenden Bereich aus einem Kunststoff hergestellt ist, welcher einen elektrisch isolierenden, aber magnetisch leitenden Füllstoff enthält.

13. Elektrische Maschine nach Anspruch 12, **dadurch gekennzeichnet, dass** zumindest in den Ausnehmungen (6, 20) für die Wicklungsabschnitte oder Leiter von einem Kühlmedium durchströmbare Kanalabschnitte (10, 26) ausgebildet sind;
wobei beispielsweise die Kanalabschnitte (10, 26) unter Verwendung eines Füllmaterials erzeugt sind, welches vor dem Gießprozess zum Freihalten der Kanalabschnitte (10, 26) ein- und/oder aufgebracht und nach dem Formgebungs- oder Gießprozess entfernt wurde, und zwar beispielsweise durch Erhitzen und/oder Aufschmelzen.

14. Elektrische Maschine nach einem der vorhergehenden Ansprüche, **dadurch gekennzeichnet,**
**dass** das Maschinenelementes (3) mehrere in Richtung zum Maschinenspalt hin offene Nuten (6) für die Wicklungsabschnitte der Wicklung (5) aufweist, und dass eine das Maschinenelement an seiner dem Maschinenspalt zugewandten Fläche umschließende rohrförmige Wandung (9) aus Kunststoff mit in diese Nuten (6) hineinreichenden und dort formschlüssig verankerten, vorzugsweise leistenartigen Vorsprüngen (9.1). vorgesehen ist,
und/oder
**dass** die Nuten (6) an ihrer Nutenöffnung (6.1) eine reduzierte Nutenbreite und im Abstand von der Nutöffnung (6.1) eine vergrößerte Nutenbreite besitzen,
und/oder
**dass** die wenigstens eine Wicklung (5) Wicklungsköpfe (5.1) aufweist, und dass im Bereich wenigstens eines Wicklungskopfes (5.1) zumindest ein diesen zumindest teilweise umschließender Kühlmediumkanal (12) gebildet ist.

15. Elektrische Maschine nach einem der vorhergehenden Ansprüche, **gekennzeichnet durch** ein die Nuten (6) für die Wicklung (5) aufweisendes Blechpaket (4).

16. Elektrische Maschine nach einem der vorhergehenden Ansprüche, **dadurch gekennzeichnet, dass** die Abschnitte der wenigstens einen Wicklung (21) in um die Maschinenachse verteilt an der Spaltfläche vorgesehenen Spulenträgern (20) aus einem magnetisch neutralen Material aufgenommen sind, und dass die Spulenträger (20) in dem Kunststoff eingebettet sind, welcher einen elektrisch isolierenden, aber magnetisch leitenden Füllstoff enthält, und zwar derart, dass ein an der Spaltfläche die Vielzahl der Magnetpole bildende Maschinenelementkörper aus Kunststoff erhalten ist,
wobei beispielsweise in den Spulenträgern (20) Kühlkanäle (26) gebildet sind,

17. Elektrische Maschine nach einem der vorhergehenden Ansprüche, **dadurch gekennzeichnet, dass** in den Kunststoff ein verstärkendes sowie ggs. auch Funktionselemente des Maschinenelementes bildendes Metallgerüst (13, 26) in den Kunststoff eingebettet ist,
wobei beispielsweise das Metallgerüst (13, 26) zumindest weitestgehend von dem Kunststoff umschlossen ist und/oder die wenigstens eine Wicklung sowie ein evtl. aus einem magnetisch und elektrisch leitenden Material bestehender und die Wicklung aufnehmender Teil des Maschinenelementes, beispielsweise ein Blechpaket (4), elektrisch von dem Metallgerüst (13, 26) isoliert ist.

18. Elektrische Maschine nach einem der vorhergehenden Ansprüche, **dadurch gekennzeichnet, dass** das Maschinenelement ein Stator (3, 3a), beispielsweise ein einen Rotor (8) umschließender Stator (3, 3a) oder ein von einem Rotor (8) umschlossener Stator ist.
